# EUROPÄISCHE PATENTANMELDUNG

(11) **EP 3 771 075 A1**
(43) Veröffentlichungstag der Anmeldung: **27.01.2021**
(21) Anmeldenummer: 19188411.3
(22) Anmeldetag: 25.07.2019
(51) Int. Cl.: H02K 9/28, H02K 13/00, H02K 13/02, H02K 17/24

(54) **DOPPELT GESPEISTE ASYNCHRONMASCHINE MIT EINEM SCHLEIFRINGLÄUFER**

(71) Anmelder: Siemens Aktiengesellschaft, 80333 München (DE)
(72) Erfinder: Binder, Herbert, 94127 Neuburg (DE); Gruber, Robert, 94099 Ruhstorf (DE); Memminger, Oliver, 94127 Neuburg a. Inn (DE); Oberneder, Manuel, 94124 Büchlberg (DE); Schifferer, Klaus, 94152 Neuhaus am Inn (DE)

(57) **Zusammenfassung**

Die Erfindung betrifft eine doppelt gespeiste Asynchronmaschine (1) mit einem Schleifringläufer (3), wobei eine Übertragung elektrischer Leistung in oder aus einem Wicklungssystem (6) des Schleifringläufers (3) über ein Schleifringsystem (9) erfolgt, das in einem stationären Trägersystem Bürsten (19) aufweist, die mit einem auf einer Welle (8) mitrotierenden Schleifring (16) elektrisch kontaktierbar sind, und dadurch eine Kontaktierung des Schleifrings (16) zu einem Wicklungssystems (6) des Schleifringläufers (3) über Zuleitungen (13) gestattet, wobei die Zuleitungen (13) in einem Abschnitt der Welle (8) geführt sind, der als Hohlwellenabschnitt (11) ausgeführt ist, wobei die Zuleitungen (13) zumindest abschnittsweise elektromagnetische Schirmungen (14, 15) aufweisen.

## Beschreibung

Die Erfindung betrifft eine doppelt gespeiste Asynchronmaschine mit einem Schleifringläufer, wobei eine Übertragung elektrischer Leistung in oder aus dem Schleifringläufer über ein Schleifringsystem erfolgt.

Bei doppelt gespeisten Asynchronmaschinen wird im Läufer ein Drehstromsystem eingeprägt. Die Übertragung des Stromes bzw. der Leistung erfolgt mittels des Schleifringsystems. Der mitrotierende Schleifring überträgt dabei die elektrische Leistung von den stationären Bürsten auf das rotierende Teil den Schleifring. Die Läuferwicklung ist mittels Zuleitungen an den jeweiligen Schleifringabschnitten elektrisch verbunden. Die einzelnen Zuleitungen sind phasengetrennt. Die Welle ist normalerweise aus einem magnetisierbaren Material gefertigt. Da nunmehr ein stromdurchflossener Leiter, also die Zuleitungen, ein Magnetfeld erzeugen, erwärmt sich die Welle aufgrund der Induktionsvorgänge. Es erfolgt ebenfalls eine Erwärmung in dem Hohlwellenabschnitt, so dass insgesamt eine zusätzliche Erwärmung des Systems durch die Induktionsvorgänge eintritt.

Damit ist eine zusätzliche Kühlleistung notwendig, um diese zusätzliche Erwärmung zu kompensieren. Eine zusätzliche Fremdbelüftung ist unter anderem aber sehr kostenintensiv.

Eine weitere Möglichkeit zur Vermeidung der Induktionsvorgänge besteht darin, das Wellenmaterial aus nicht magnetisierbaren Werkstoff zu fertigen. Jedoch ist diese Möglichkeit sehr kostenintensiv und nicht immer anwendbar, da bezüglich der mechanischen Wellenfestigkeit nicht jedes Material einsetzbar ist.

Ausgehend davon liegt der Erfindung die Aufgabe zugrunde, eine doppelt gespeiste Asynchronmaschine mit einem Schleifringläufer zu schaffen, die auch bei magnetisierbaren Wellen eine Reduktion der Induktionsleistungen aufweist und damit die unzulässige Erwärmung reduziert.

Die Lösung der gestellten Aufgabe gelingt durch eine doppelt gespeiste Asynchronmaschine mit einem Schleifringläufer, wobei eine Übertragung elektrischer Leistung in oder aus einem Wicklungssystem des Schleifringläufers über ein Schleifringsystem erfolgt, das in einem stationären Trägersystem Bürsten aufweist, die mit einem auf einer Welle mitrotierenden Schleifring elektrisch kontaktierbar sind, und dadurch eine Kontaktierung des Schleifrings zu einem Wicklungssystems des Schleifringläufers über Zuleitungen gestattet, wobei die Zuleitungen in einem Abschnitt der Welle geführt sind, der als Hohlwellenabschnitt ausgeführt ist, wobei die Zuleitungen zumindest abschnittsweise elektromagnetische Schirmungen aufweisen.

Durch die Schirmungen der Zuleitungen werden nunmehr die Induktionsvorgänge erheblich reduziert, so dass eine zusätzliche Erwärmung in den relevanten Wellenabschnitten unterbleibt.

Vorteilhafterweise können dabei entweder die Bohrungen aus dem Hohlwellenabschnitt oder zusätzlich auch die Verläufe der Zuleitungen im Hohlwellenabschnitt mit Schirmmaterial versehen sein. Um die Induktionsvorgänge elektrisch ausreichend abzuleiten, sind dementsprechende Schirmanbindungen der Schirmungen dieser Zuleitungen an das elektrische Potential der Welle erforderlich.

Diese Zuleitungen sind je nach Leistungsklasse und damit dem Schleifringläufer bereitgestellten elektrischen Energie der doppelt gespeisten Asynchronmaschine entweder als Kabel, Litzenleiter oder auch Leiterprofile aus Kupfer ausgeführt.

Die Schirmung weist ein elektrisch gut leitfähiges Material auf, beispielsweise Kupfer oder Aluminium. Diese Schirmung kann als Folie oder auch als engmaschiges Draht- bzw. Litzengeflecht ausgeführt sein.

Der von den Zuleitungen erzeugte magnetische Fluss dringt aufgrund dieser Schirmungen nur in sehr geringem Maße in das umliegende Wellenmaterial ein. Damit reduziert sich die bereitzustellende Kühlleistung der doppelt gespeisten Asynchronmaschine, so dass eine zusätzliche oder leistungsfähigere Fremdbelüftung gegebenenfalls eingespart werden kann.

Der Hohlwellenabschnitt und/oder die Bohrungen aus dem Hohlwellenabschnitt können auch mit einem schwach magnetisch leitenden Material ausgekleidet sein oder als leitfähige Hülse eingebracht werden. Dies stellt eine Alternative oder eine Ergänzung zu der Ummantelung der Zuleitungen mit Folie oder Draht- bzw. Litzengeflecht dar.

Die magnetisch leitende Auskleidung kann dabei eingesprüht oder auch galvanisch aufgebracht werden.

Die Erfindung sowie weitere vorteilhafte Ausgestaltungen der Erfindung werden anhand schematisch dargestellter Ausführungsbeispiele näher erläutert. Darin zeigen:
- FIG 1: eine prinzipiell doppelt gespeiste Asynchronmaschine,
- FIG 2: einen Teillängsschnitt der doppelt gespeisten Asynchronmaschine,
- FIG 3: eine perspektivische Darstellung eines Teilausschnitts,
- FIG 4: einen weiteren Teilausschnitt der Welle,
- FIG 5: einen perspektivischen Teilausschnitt des Wellenaustritt der Zuleitung,
- FIG 6: einen teil-perspektivischen Wellenausschnitt des Austritts der Zuleitungen mit Schirmung,
- FIG 7: einen Längsschnitt der Welle im Bereich des Austritts,
- FIG 8: eine weitere Darstellung des Austritts aus der Welle,
- FIG 9: einen weiteren Längsschnitt eines Wellenabschnitts.

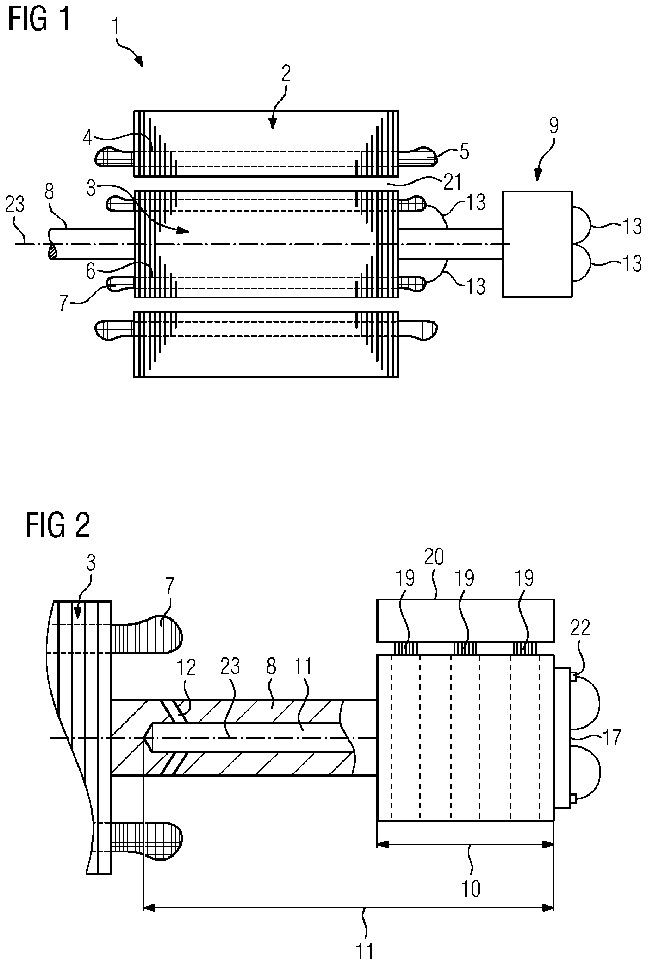

FIG 1 zeigt eine doppelt gespeiste Asynchronmaschine 1 mit einem Stator 2 und einem Schleifringläufer 3, wobei der Stator 2 ein Wicklungssystem 4 aufweist, das an den Stirnseiten des Stators 2 Wickelköpfe 5 aufweist. Auch der Schleifringläufer 3 weist ein Wicklungssystem 6 auf, das ebenfalls Wickelköpfe 7 ausbildet. Der Schleifringläufer 3 ist mit einer Welle 8 drehfest verbunden, die ebenfalls auf einem axialen Ende, insbesondere der BS-Seite ein Schleifringsystem 9 aufweist. Das Schleifringsystem 9 weist dabei mit der Welle 8 mitrotierende Schleifringe 16 auf, die jeweils über eine oder mehrere Bürsten 19, die stationär an einer Bürstenhalterung 20 angebracht sind, elektrische Leistung zum Schleifringläufer 3 über Zuleitungen 13 bereitstellen.

FIG 2 zeigt in einer detaillierteren Darstellung das Schleifringsystem 9 mit einem Teil des Schleifringläufers 3. Die Zuleitungen 13 führen dabei von Kontaktpunkten 22 am Schleifringsystem 9 über axial in einen Hohlwellenabschnitt 11 eingeführte Zuleitungen 13 zu Bohrungen 12 am Ende des Hohlwellenabschnitts 11 und können damit das Wicklungssystem 6 des Schleifringläufers 3 elektrisch mit Leistung versorgen.

Am Wellenabschnitt 10 ist das Schleifringsystem 9 angebracht das einen axialen Teil eines Hohlwellenabschnitts 11 der Welle 8 ausmacht.

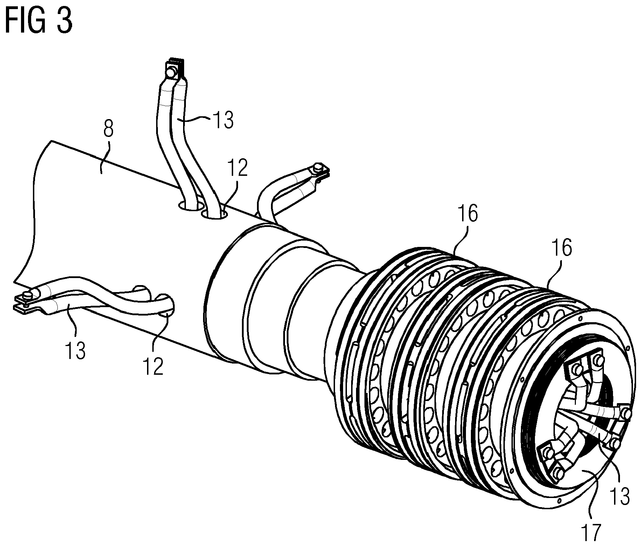

FIG 3 zeigt in einer teil-perspektivischen Darstellung ein Schleifringsystem 9 mit drei Schleifringen 16, deren Zuleitungen 13 in den Hohlwellenabschnitt 11 der Welle 8 eingeführt sind und dort aus Bohrungen 12 am Ende des Hohlwellenabschnitts 11 aus der Welle 8 führbar sind. In diesem Fall sind pro Phase L1, L2, L3 zwei Zuleitungen 13 vorgesehen. Die Bohrungen 12 einer jeden Phase aus der Welle 8 liegen dabei axial hintereinander.

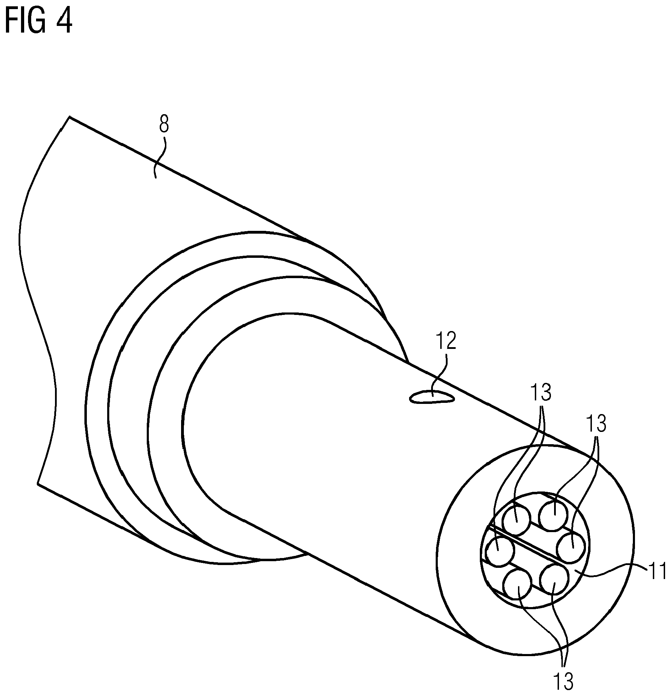

FIG 4 zeigt eine beispielhafte Bohrung 12 im Hohlwellenabschnitt 11 ebenso wie einen möglichen Verlauf der Zuleitungen 13 im Hohlwellenabschnitt 11 der Welle 8. Auch in diesem Fall sind pro Phase L1, L2, L3 zwei Zuleitungen 13 vorgesehen.

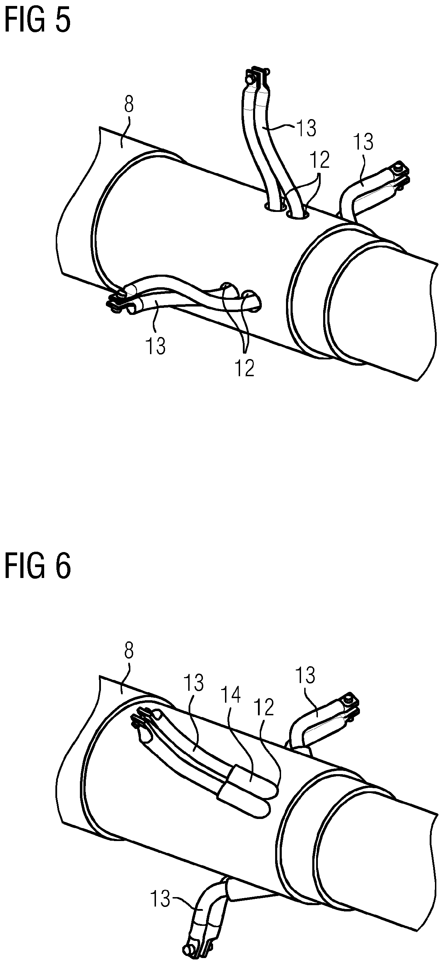

FIG 5 zeigt den Abschnitt der Welle 8, am Ende des Hohlwellenabschnitts 11 an dem die beiden Zuleitungen 13, z.B. Litzen, pro Phase aus dem Hohlwellenabschnitt 11 ragen. Die Bohrungen 12 sind dabei axial hintereinander angeordnet.

FIG 6 zeigt einen ähnlichen Abschnitt einer Welle 8, wie in FIG 5, jedoch sind dort die Bohrungen 12 der einzelnen Phasen in Umfangsrichtung nebeneinander angeordnet und jeweils mit Schirmungen 14 im Bereich der Bohrung 12 versehen.

Die Schirmung 14 ist dabei ein Drahtgeflecht aus einem elektrisch gut leitfähigen Material, wie z.B. Kupfer oder Aluminium.

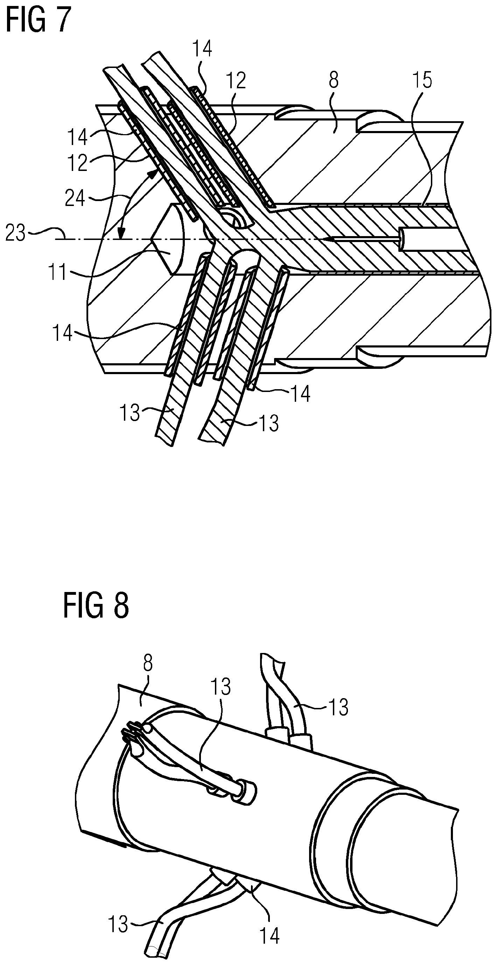

FIG 7 zeigt einen Schnitt dieser Welle 8 mit dem Hohlwellenabschnitt 11. Aus diesen Hohlwellenabschnitt 11 ragen die Zuleitungen 13 der jeweiligen Phase quasi radial nach außen und sind mit Schirmungen 14 im Bereich der Bohrung 12 versehen. Durch die Neigung 24 der Bohrungen 12 zur Achse 23 können die Krümmungsradien der Zuleitungen 13 beim Austritt aus dem Hohlwellenabschnitt 11 vergrößert werden.

Im Bereich der Hohlwellenbohrung 11 ist ebenfalls eine Abschirmung 15 vorgesehen, die den Hohlwellenabschnitt 11 abschirmt und somit ebenfalls zur Unterdrückung der Wirbelströme beiträgt. Damit reduziert sich auch Aufheizung die diesem Bereich.

Diese Schirmung 14,15 bewirkt nunmehr grundsätzlich, dass der von den Zuleitungen 13 erzeugte magnetische Fluss aufgrund dieser Schirmungen 14,15 nur in sehr geringem Maße in das umliegende Wellenmaterial, insbesondere Hohlwellenabschnitts 11 und/oder des Wellenmaterials im Bereich der Bohrungen 12 eindringt. Damit reduziert sich die bereitzustellende Kühlleistung der doppelt gespeisten Asynchronmaschine 1, so dass eine zusätzliche oder leistungsfähigere Fremdbelüftung gegebenenfalls eingespart werden kann.

Der Hohlwellenabschnitt 11 und/oder die Bohrungen 12 aus dem Hohlwellenabschnitt 11 können auch mit einem schwach magnetisch leitenden Material ausgekleidet sein oder als leitfähige Hülse eingebracht werden. Dies stellt eine Alternative oder eine Ergänzung zu der Schirmung 14,15 der Zuleitungen 12 dar.

Die magnetisch leitende Auskleidung kann dabei galvanisch aufgebracht oder eingesprüht sein.

FIG 8 zeigt diese Konstellation mit einer geschlossenen Welle 8.

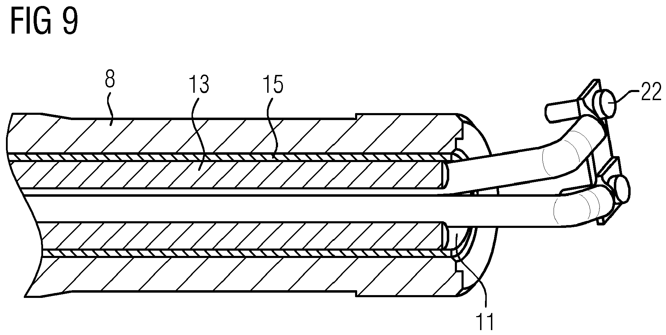

FIG 9 zeigt einen endseitigen Teil der Welle 8 ohne Schleifringsystem 9, das den Hohlwellenabschnitt 11 mit Schirmung 15 zeigt, ebenso wie beispielhafte Zuleitungen 13 und deren Kontaktpunkt 22, die an einem Stützring 17 des Schleifrings 16 angebracht sind.

Derartige Schleifringläufer 3 werden bei Windkraftanlagen eingesetzt, die als Generator doppelt gespeiste Asynchronmaschinen aufweisen. Durch das erfindungsgemäße Schleifringsystem 9 reduziert sich die aufzubringende Kühlleitung innerhalb der Gondel der Windkraftanlage.

## Patentansprüche

1. Doppelt gespeiste Asynchronmaschine (1) mit einem Schleifringläufer (3), wobei eine Übertragung elektrischer Leistung in oder aus einem Wicklungssystem (6) des Schleifringläufers (3) über ein Schleifringsystem (9) erfolgt, das in einem stationären Trägersystem Bürsten (19) aufweist, die mit einem auf einer Welle (8) mitrotierenden Schleifring (16) elektrisch kontaktierbar sind, und dadurch eine Kontaktierung des Schleifrings (16) zu einem Wicklungssystems (6) des Schleifringläufers (3) über Zuleitungen (13) gestattet, wobei die Zuleitungen (13) in einem Abschnitt der Welle (8) geführt sind, der als Hohlwellenabschnitt (11) ausgeführt ist, wobei die Zuleitungen (13) zumindest abschnittsweise elektromagnetische Schirmungen (14, 15) aufweisen.

2. Doppelt gespeiste Asynchronmaschine (1) nach Anspruch 1, **dadurch gekennzeichnet, dass** die Zuleitungen (13) aus dem Hohlwellenabschnitt (11) über Bohrungen (12) zum Wicklungssystem (6) des Schleifringläufers (3) geführt sind.

3. Doppelt gespeiste Asynchronmaschine (1) nach Anspruch 1 oder 2, **dadadurch gekennzeichnet, dass** die Zuleitungen (13) zumindest im Bereich der Bohrungen (12) elektromagnetische Schirmungen (14, 15) aufweisen.

4. Doppelt gespeiste Asynchronmaschine (1) nach einem der vorhergehenden Ansprüche, **dadurch gekenn**- **zeichnet**, dass die Zuleitungen (13) aus Kabeln, Litzenleitern oder Leiterprofilen aufgebaut sind.

5. Doppelt gespeiste Asynchronmaschine (1) nach einem der vorhergehenden Ansprüche, **dadurch gekenn**- **zeichnet**, dass die Schirmungen (14, 15) zumindest einseitig auf elektrisches Potential der Welle (8) geführt sind.

6. Windkraftanlage mit einer doppelt gespeiste Asynchronmaschine (1) als Generator nach einem der vorhergehenden Ansprüche.
